# FASCICULE DE BREVET EUROPEEN

(11) **EP 2 091 722 B1**
(45) Date de publication et mention de la délivrance du brevet: **06.04.2011**
(21) Numéro de dépôt: 07871999.4
(22) Date de dépôt: 20.12.2007
(51) Int. Cl.: B29C 70/76, B60J 1/00

(54) **PROCEDE DE FABRICATION D'UN VITRAGE MUNI D'UN CORDON PROFILE COMPORTANT UN INSERT**
VERFAHREN ZUR HERSTELLUNG EINER GLASPLATTE MIT EINER PROFILLEISTE MIT EINEM EINSATZ
METHOD FOR PRODUCING A GLASS PANEL HAVING A PROFILED RIM INCLUDING AN INSERT

(30) Priorité: 22.12.2006 FR 0655892
(43) Date de publication de la demande: 26.08.2009
(73) Titulaire: Saint-Gobain Glass France, 92400 Courbevoie (FR)
(72) Inventeur: SUBRA, Renaud, 8600 Dubendorf (FR); KLEO, Christophe, 60350 Attichy (FR); LEROY, Fabrice, 60170 Cambronne Les Ribecourt (FR)
(74) Mandataire: Jamet, Vincent
(86) Numéro de dépôt international: PCT/FR2007/052588
(87) Numéro de publication internationale: WO 2008/078054

(56) Documents cités:
- FR-A1- 2 814 705
- FR-A1- 2 856 951

## Description

La présente invention se rapporte à un procédé de fabrication d'un vitrage muni d'au moins un cordon profilé en polymère comportant un (ou plusieurs) insert(s), ce cordon profilé étant réalisé par mise en oeuvre de la technique dite « d'encapsulation ».

Il est connu dans l'ail antérieur de positionner un (ou plusieurs) insert(s) à l'intérieur d'un cordon profilé fabriqué par encapsulation. Ces inserts peuvent être complètement intégrés dans la matière constituant le cordon profilé de telle sorte que seul(s) le (ou les) point(s) de fixation dans le moule soit (ou soient) saillant(s) ou être en majeure partie saillant à la surface du cordon profilé. Ils peuvent servir à augmenter la rigidité générale du vitrage et/ou à permettre sa fixation à des éléments de la carrosserie du véhicule et/ou encore à permettre la fixation d'accessoires au vitrage.

Actuellement, lors de la fabrication en série d'un vitrage galbé à cordon profilé encapsulé, le vitrage est galbé dans sa configuration finale avant l'étape d'encapsulation, c'est-à-dire que le vitrage est fabriqué de telle manière qu'il présente avant l'encapsulation les dimensions qu'on lui souhaite avoir lors de la livraison pour montage sur le véhicule.

Toutefois, si le vitrage encapsulé comporte au moins un insert, lors de l'étape d'encapsulation les différents éléments qui le constituent (substrat verrier, cordon profilé, insert(s)) passent de la température ambiante jusqu'à une température de l'ordre de 80 °C ou supérieure à 100°C en quelques secondes, atteignent cette température pendant l'injection de la matière polymère, puis sont refroidis rapidement à l'air libre. Dans ces conditions, le verre et les inserts, qui ont chacun un coefficient de dilatation thermique très différent, changent de dimensions selon un rapport qui n'est pas de un pour un.

Lorsque la matière constituant le cordon profilé réticule, elle bloque ces éléments dans une position qui n'est pas leur position d'équilibre à la température ambiante.

Pendant le refroidissement, le verre et les inserts se rétractent, et cette rétractation engendre des déformations à l'intérieur de la pièce. Le galbe final de la pièce n'est donc ni celui du verre avant encapsulation, ni le galbe absolument exact souhaité, ni celui des inserts, ni même celui du moule. Les toits sont alors appelés toits « auto-galbants » car ils ont obtenu un galbe propre particulier.

Ce phénomène est d'ailleurs observable également lorsque le vitrage avant encapsulation est plat : après encapsulation, il présente un certain galbe.

Suivant les cas, les vitrages peuvent être plus galbées que souhaité à certain(s) endroit(s) et/ou moins galbés que souhaité à d'autre(s) endroit(s).

Le document FR-A- 2 856 951 décrit une procédé de fabrication de vitrages en série galbé dans lequel les vitrages en série sont chacun galbés et sont chacun munis d'au moins un cordon profilé en polymère comportant un ou plusieurs insert(s), ledit cordon profilé étant fabriqué par encapsulation d'un élément vitré dans un moule présentant une empreinte.

Le but de l'invention est de fournir une solution à ce problème afin que les vitrages livrés pour montage dans la baie de la carrosserie présentent au final exactement le galbe souhaité.

Par galbe au sens de la présente invention, il faut comprendre la courbure générale du vitrage, celle-ci pouvant être globalement nulle lorsque le vitrage présente un galbe plat.

Toutefois, les valeurs de la courbure en certains endroits du vitrage ont plus d'importance que d'autre ; l'expression « le galbe souhaité » désigne ainsi les endroits du vitrage où il est le plus important que la courbure soit respectée ; il s'agit en particulier de la courbure du vitrage aux endroits où cette courbure affleure avec la carrosserie.

En considérant que le but de l'invention est de chercher à fabriquer en série des vitrages à partir de données nominales définissant un vitrage de référence qui est galbé et en considérant par ailleurs que ce vitrage de référence est donné avec des intervalles pour les tolérances admises pour ces données nominales ; en considérant par ailleurs que les vitrages en série sont chacun galbés et sont chacun munis d'au moins un cordon profilé en polymère comportant un (ou plusieurs) insert(s), ledit cordon profilé étant fabriqué par encapsulation d'un élément vitré dans un moule présentant une empreinte ; en considérant en outre que les vitrages de série fabriqués présentent un galbe qui correspond à celui du vitrage de référence en respectant les intervalles de tolérance ; la présente invention propose ainsi que pour la fabrication de la série de vitrage, pour chaque vitrage dans la série, au moins un des trois élément suivant ne présente pas une configuration correspondant aux dimensions pour le vitrage de référence :
i- l'empreinte du moule, ou
ii- l'élément vitré, ou
iii- l'insert ou les inserts.

Ainsi, d'une manière complètement surprenante, il est possible de parvenir à réaliser une série de vitrages qui sont tous conformes au vitrage de référence dans ses intervalles de tolérance alors qu'au moins une partie du matériel utilisé n'est pas conforme à celui normalement utilisé pour le vitrage de référence.

Il est ainsi possible que dans la série de vitrage, pour chaque vitrage, l'empreinte du moule ne présente pas une configuration correspondant aux dimensions pour le vitrage de référence.

Il est aussi possible que dans la série, pour chaque vitrage, l'élément vitré ne présente pas une configuration correspondant aux dimensions pour le vitrage de référence.

Il est en outre possible que dans la série, pour chaque vitrage l'insert ou les inserts ne présente(nt) pas une configuration correspondant aux dimensions pour le vitrage de référence.

Par ailleurs, il est possible de parvenir à réaliser une série de vitrages qui sont tous conformes au vitrage de référence avec ses intervalles de tolérance alors que la majeure partie du matériel utilisé n'est pas conforme à celui normalement utilisé pour le vitrage de référence.

Il est ainsi possible que dans la série, pour chaque vitrage, d'une part l'empreinte du moule et d'autre part l'élément vitré ne présentent pas une configuration correspondant aux dimensions pour le vitrage de référence.

Il est aussi possible que dans la série, pour chaque vitrage, d'une part l'empreinte du moule et d'autre part l'insert ou les inserts ne présentent pas une configuration correspondant aux dimensions pour le vitrage de référence.

Il est en outre possible que dans la série, pour chaque vitrage, au moins, d'une part l'élément vitré et d'autre part l'insert ou les inserts, ne présentent pas une configuration correspondant aux dimensions pour le vitrage de référence.

Enfin, il est possible de parvenir à réaliser une série de vitrages qui sont tous conformes au vitrage de référence avec ses intervalles de tolérance alors que tout le matériel utilisé n'est pas conforme à celui normalement utilisé pour le vitrage de référence.

Il est ainsi possible que dans la série, pour chaque vitrage, ni l'empreinte du moule, ni l'élément vitré, ni l'insert ou les inserts ne présentent une configuration correspondant aux dimensions pour le vitrage de référence.

La présente invention repose par ailleurs sur le fait de réaliser au moins une présérie, c'est-à-dire de fabriquer au moins un ensemble de vitrages prototypes et d'utiliser les mesures moyennes des galbes de ces vitrages prototypes pour modifier l'outillage utilisé et permettre ainsi de fabriquer une série finale de vitrages conforme aux attentes.

La présente invention consiste ainsi aussi en un procédé de fabrication de vitrages en série à partir de données nominales définissant un vitrage de référence qui est galbé, ainsi que d'intervalles de tolérance admises pour ces données nominales, dans lequel les vitrages en série sont galbés et sont chacun munis d'au moins un cordon profilé en polymère comportant un (ou plusieurs) insert(s), ledit cordon profilé étant fabriqué par encapsulation d'éléments vitrés dans un moule présentant une empreinte, dans lequel les vitrages de série fabriqués présentent un galbe qui correspond à celui du vitrage de référence en respectant les intervalles de tolérance, et dans lequel ledit procédé comporte au moins les étapes consistant à :
A- fabriquer un ensemble de vitrages prototypes par encapsulation d'éléments vitrés dans un moule présentant une empreinte [correspondant aux dimensions nominales du vitrage de référence],
B- mesurer le galbe de tous les vitrages prototypes de l'étape précédente après l'encapsulation,
C-corriger au moins un matériel choisi dans la liste suivante :
   i- l'empreinte du moule, ou
   ii- l'élément vitré, ou
   iii- l'insert ou les inserts,
      pour compenser les valeurs moyennes de galbe après encapsulation qui sont trop élevées ou trop basses,
D- fabriquer les vitrages de série par encapsulation dans un moule avec le matériel corrigé.

Dans une variante, l'étape C de correction d'au moins un matériel est opérée sur un matériel présentant avant l'étape de correction une configuration correspondant aux dimensions nominales pour le vitrage de référence.

Dans une variante, au moins un matériel présente avant l'étape C de correction une configuration ne correspondant pas aux dimensions nominales pour le vitrage de référence.

Par exemple, il est possible que l'empreinte du moule ne corresponde pas aux dimensions nominales du vitrage de référence et/ou que les éléments vitrés ne correspondent pas aux dimensions nominales du vitrage de référence et/ou que l'insert ou les inserts ne correspondent pas à celui ou à ceux du vitrage de référence.

Il est en outre possible qu'aucun matériel i, ii ou iii ne présente avant l'étape C de correction une configuration correspondant aux dimensions nominales pour le vitrage de référence.

Une solution avantageuse pour corriger l'empreinte du moule pour compenser les valeurs moyennes de galbe après encapsulation qui sont trop élevées ou trop basses, consiste à mettre en oeuvre successivement les étapes suivantes :
- sélectionner un ensemble de points i identiques dans les trois dimensions pour tous les vitrages prototypes et le vitrage de référence,
- calculer pour l'ensemble des vitrages prototypes la moyenne de l'écart au nominal du vitrage de référence Pi en chaque point i de galbe,
- calculer la moyenne Qi de cet écart Pi du point situé coté gauche de l'axe longitudinal des vitrages (qui est aussi l'axe d'avancé du véhicule pour les pare-brise, lunettes arrières et vitrages de toit) prototypes avec l'écart Pi de son homologue coté droit de l'axe longitudinal des vitrages prototypes,
- calculer l'écart Ti en chaque point i entre le nominal du vitrage de référence et le centre de l'intervalle de tolérance admissible au point i,
- calculer la compensation de galbe en chaque point i des demi volumes gauche et droit par la formule : Qi-Ti.

Une solution avantageuse pour corriger l'élément vitré pour compenser les valeurs moyennes de galbe après encapsulation qui sont trop élevées ou trop basses, consiste à modifier des paramètres de bombage des éléments vitrés avant l'encapsulation, ces paramètres étant choisis au moins dans la liste suivante :
- configuration du chauffage, en intensité et en localisation,
- forme de l'outil de support et/ou de l'outil de formage de l'élément vitré.

Une solution avantageuse pour corriger l'insert ou les inserts pour compenser les valeurs moyennes de galbe après encapsulation qui sont trop élevées ou trop basses, consiste à modifier la forme de l'insert ou des inserts par exemple par déformation (notamment par pressage) ou par conformation d'un nouveau type d'insert.

Le dispositif pour la mise en oeuvre du procédé selon l'invention, comporte au moins,
i- l'empreinte du moule, ou
ii- l'élément vitré, ou
iii- l'insert ou les inserts,
   ne présentant pas une configuration correspondant aux dimensions pour le vitrage de référence pour une série de vitrages.

En particulier, le dispositif comporte au moins un matériel corrigé choisi dans la liste suivante :
i- l'empreinte du moule, ou
ii- l'élément vitré, ou
iii- l'insert ou les inserts,
   pour compenser les valeurs moyennes de galbe après encapsulation qui sont trop élevées ou trop basses,

Les vitrages munis d'au moins un cordon profilé en polymère comportant un (ou plusieurs) insert(s), obtenus par la mise en oeuvre du procédé selon l'invention et les vitrages de série fabriqués présentent un galbe qui correspond à celui du vitrage de référence en respectant les intervalles de tolérance.

Ces vitrages peuvent être, dans la série, des vitrages monolithiques s'ils ne comportent qu'un seul élément vitré, par exemple en verre, ou peuvent être des vitrages multiples incorporant plusieurs éléments vitrés, comme par exemple des vitrages feuilletés constitués de deux feuilles de verre entre lesquelles est disposée une feuille de matière plastique, par exemple en Poly Vinyle Butyral.

La présente invention sera mieux comprise à la lecture de la description détaillée ci-après d'un exemple de réalisation non limitatif et des figures ci-jointes :
- La figure 1 illustre une vue de dessous d'un vitrage de toit automobile muni sur sa face intérieure d'un cordon encapsulé ;
- La figure 2 illustre une vue partielle en coupe selon AA' de la figure 1 ;
- La figure 3 illustre une vue partielle en coupe selon BB' de la figure 1 ;
- La figure 4 illustre des mesures de déformations moyennes d'un ensemble de vitrages prototypes en certains points du vitrage par rapport à la déformation du vitrage de référence, ainsi que les zones de tolérances admises ; et

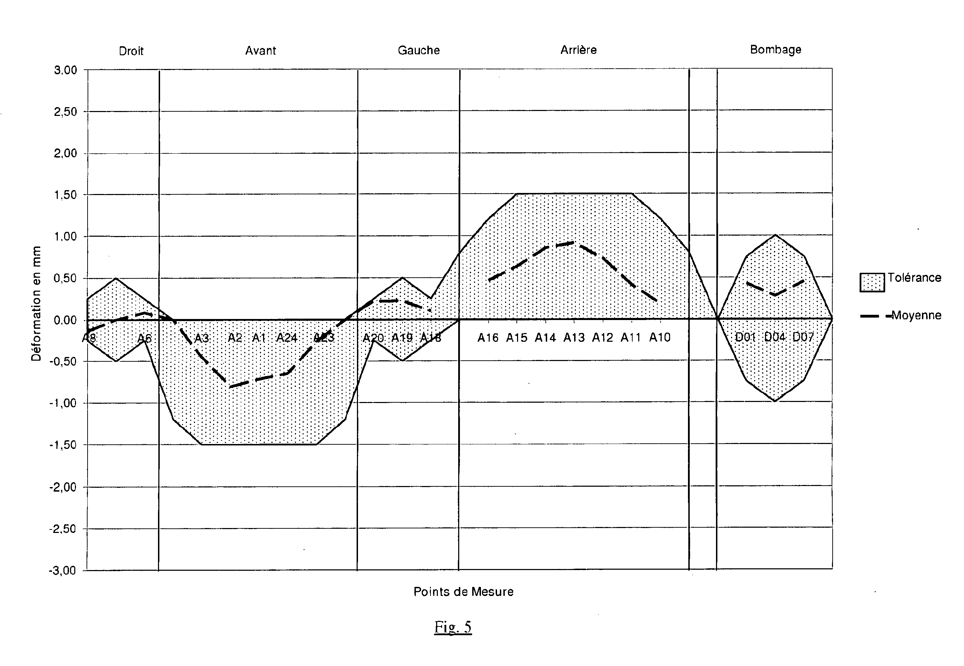

- La figure 5 illustre les mesures de déformations moyennes des vitrages de série aux mêmes points de mesures qu'en figure 4 par rapport à la déformation du vitrage de référence, ainsi que les zones de tolérances admises.

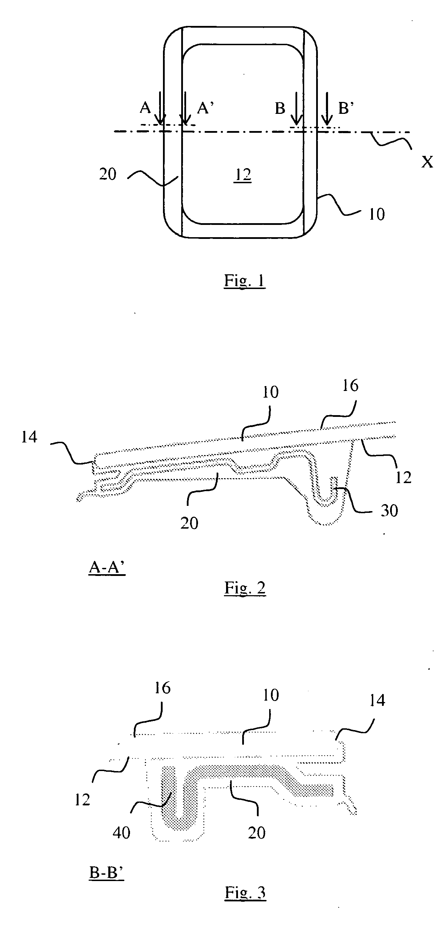

Il est précisé que les proportions entre les divers éléments représentés ne sont pas rigoureusement respectées dans les figures 1 à 3 afin d'en faciliter la lecture.

Le vitrage 10 illustré sur la figure 1 est un vitrage de toit de véhicule destiné à être positionné dans une baie ménagée dans le toit d'un véhicule et plus particulièrement d'un véhicule automobile.

Ce vitrage présente ainsi deux surfaces principales, une surface intérieure 12 destinée à être positionnée vers l'intérieur du véhicule et, à l'opposé, une surface extérieure 16, ces deux surfaces étant séparées par un chant 14.

Ce vitrage présente par ailleurs un galbe, c'est-à-dire qu'il n'est pas plan mais présente une déformation générale, obtenue par bombage. Cette déformation peut être ménagée selon un plan, comme le plan longitudinal du véhicule ou un plan transversal perpendiculaire à ce plan longitudinal. La déformation peut par ailleurs être opérée selon ces deux plans : il s'agit alors de « double bombage ».

En général, le bombage est opéré de manière à ce que le vitrage conserve une symétrie selon le plan longitudinal du véhicule, illustré ici par l'axe X.

Le vitrage illustré en figure 1 est un vitrage de toit automobile traditionnel dont la longueur selon l'axe X est inférieure à la largeur mais il pourrait aussi s'agir d'un vitrage de toit automobile dit « panoramique » dont la longueur selon l'axe X est égale ou supérieure à la largeur.

Le vitrage 10 incorpore un élément vitré en verre monolithique, c'est-à-dire constitué d'une feuille de verre unique qui est ici trempée, mais il pourrait aussi incorporer un élément vitré monolithique synthétique ou un élément vitré multiple, c'est-à-dire constitué de plusieurs feuilles de matière minérales ou synthétiques entre lesquelles est inséré au moins une couche de matière adhérente (cas des vitrages feuilletés).

L'épaisseur du vitrage 10 est ici de 3,85 mm.

Dans le cas d'un vitrage pour véhicule, le vitrage présente généralement au moins partiellement à sa périphérie une bande d'ornementation, non illustrée ici. Cette bande d'ornementation résulte en général d'un dépôt d'émail, réalisé sur la face intérieure du vitrage ou sur une face intercalaire du vitrage pour les vitrages multiples, mais elle peut également résulter d'une coloration partielle et/ou périphérique d'une feuille de matière utilisée, notamment d'une feuille en matière organique (cas des vitrages feuilletés).

Le vitrage 10 est pourvu sur toute sa périphérie, en contact avec la surface intérieure 12 et une partie du chant 14, d'un cordon profilé 20 en polymère obtenu par la mise en oeuvre d'une étape d'encapsulation, postérieurement à l'étape de bombage. Ce cordon présente ainsi une forme annulaire, mais il est tout à fait possible que le cordon profilé ne soit prévu que sur une partie seulement de la périphérie du vitrage.

Le cordon profilé pourrait par ailleurs n'être pourvue que sur la périphérie de la surface extérieure 16, débordant éventuellement contre tout ou partie de l'épaisseur du chant 14, ou encore sur la périphérie des deux surfaces principales 12, 16 et du chant 14.

La matière utilisée ici est du polyuréthanne, mais toutes les matières polymères utilisées habituellement pour l'encapsulation peuvent être utilisées ici.

Le cordon profilé du toit illustré en figure 1 intègre deux inserts transversaux, un insert transversal avant 30 positionné dans une partie du cordon profilé situé vers l'avant par rapport à la direction d'avancé du véhicule et illustré en détail sur la figure 2, et un insert transversal arrière 40 positionné dans une partie du cordon profilé situé vers l'arrière véhicule et illustré en détail sur la figure 3.

Ces inserts sont des inserts de renfort en acier et présentent ainsi un module d'élasticité (ou module d'Young) de l'ordre de 210 GPa.

Chaque insert est positionné correctement dans le moule d'encapsulation grâce à au moins un et de préférence deux aimants situé(s) dans le fond de l'empreinte du moule.

Ces inserts sont en majeure partie noyés dans le matière constitutive du cordon profilé, de telle sorte que seul(s) le (ou les) point(s) de positionnement en contact avec un aimant de positionnement situé dans le moule ne fait pas (ou ne font pas) saillie (éventuellement dans un creux du cordon profilé) à l'extérieur du cordon profilé.

Ces inserts sont des inserts de renforts destinés à améliorer la rigidité du vitrage selon la direction générale de l'insert.

Toutefois, il pourrait tout à fait être imaginé que les inserts soient en majeure partie saillant à l'extérieur du cordon profilé de telle sorte les parties saillantes permettent de réaliser la fixation du vitrage dans la baie de la carrosserie et/ou permettent de fixer un ou plusieurs accessoires et/ou pour fasse saillie pour enjoliver le cordon profilé.

Par ailleurs, puisque le vitrage illustré est un vitrage de toit automobile traditionnel dont la longueur selon l'axe X est inférieure à la largeur, il est plus opportun d'augmenter la rigidité du vitrage selon la transversale ; Toutefois, si le vitrage était un vitrage de toit dit « panoramique » dont la longueur selon l'axe X est supérieure à la largeur, il sera alors évidemment opportun d'augmenter la rigidité du vitrage selon l'axe longitudinal avec des inserts de renforts longitudinaux.

Sur les figures 2 et 3, il peut être observé que le cordon profilé 20 est fixé contre la surface intérieure 12 du vitrage 10, déborde sur une partie du chant 14, mais ne déborde pas sur la surface extérieure 16.

Toutefois, la forme donnée au cordon profilé ainsi qu'aux inserts dans les figures 2 et 3 est complètement arbitraire et l'homme du métier sait comment dimensionner le cordon profilé ainsi que les inserts pour obtenir les effets souhaités. C'est la raison pour laquelle dans les figures suivantes la forme du cordon profilé est réalisée de manière symbolique avec des traits simples.

L'homme du métier connaît en particulier du brevet américain N° US 6,106,758, dont le contenu est incorporé ici par référence, une technique d'encapsulation avec insertion d'inserts dans le cordon profilé.

Comme expliqué plus haut, les matériaux utilisés ont des coefficients de dilatation thermiques très différents :
- pour le verre : 8,6 x 10⁻⁸ K⁻¹ (de 0 à 300°C),
- pour l'acier :1,1 x 10⁻⁵ K⁻¹ (de 0 à 300°C).

Même si la température d'injection lors de l'encapsulation n'est pas très élevée (en général de l'ordre de 100 °C et parfois jusqu'à 200°C, mais rarement au-delà) et même si la durée du cycle d'injection est courte (en général de l'ordre de 20 à 30 secondes pour les petites pièces et parfois jusqu'à 1 voire 2 minutes pour les très grandes pièces, mais rarement au-delà), du fait de cette très grande différence de coefficients, le vitrage ne présente pas exactement la même configuration avant et après l'encapsulation.

Lorsqu'un constructeur automobile conçoit un nouveau modèle de véhicule, il fournit les dimensions d'un vitrage de référence, c'est-à-dire qu'il fourni une définition de la forme générale du vitrage qu'il souhaite intégrer dans le modèle de véhicule, en précisant des tolérances, sous forme de plages de tolérance ou d'intervalles de tolérances, qui sont admissibles en certains points particuliers.

Il peut arriver que les intervalles de tolérances en certains points ne soient pas centrés sur ce point, c'est-à-dire que la tolérance en positif soit différente, en valeur absolue, de la tolérance en négatif. Dans ce cas, ce n'est pas le vitrage de référence tel que fourni par le constructeur qui est utilisé au sens du présent document mais un vitrage dit « nominal » correspondant au vitrage de référence avec des intervalles recentrés le cas échéant de manière à ce que la tolérance en positif en tout point donné soit identique, en valeur absolue, à la tolérance en négatif.

Les « données nominales » au sens de la présente invention désigne ainsi soit directement les données du vitrage de référence si l'intervalle de tolérance associé à chaque point est équilibré de manière à ce qu'en tout point donné la tolérance en positif soit identique, en valeur absolue, à la tolérance en négatif, soit les données du vitrage de référence corrigées de manière à ce qu'en tout point donné la tolérance en positif soit identique, en valeur absolue, à la tolérance en négatif.

Pour que les vitrages de série puissent ensuite être installés dans la baie de la carrosserie sur les chaînes de montage, il faut bien sûr que ces vitrages de série correspondent au vitrage de référence en considérant ces tolérances.

Toutefois, un problème se pose lorsque les vitrages intègrent un ou plusieurs inserts.

Lorsqu'il est procédé à l'encapsulation d'un vitrage test qui correspond au vitrage de référence avec des inserts correspondant à ceux du vitrage de référence et avec un moule d'encapsulation comportant une empreinte de moule correspondant à celle du vitrage de référence, en certains points du vitrage le galbe peut être très légèrement supérieur au galbe souhaité (de l'ordre de 0,1 à 0,3 mm), mais en d'autres points le galbe peut être assez supérieur au galbe souhaité (de l'ordre de 0,5 à 1 mm) et en certains points, il peut même être très supérieur au gable souhaité (de 1,5 mm jusqu'à 2,5 mm voire 3,5 mm).

Ainsi, le vitrage test encapsulé ne correspond finalement pas exactement au vitrage de référence avec ses tolérances.

Pour remédier à ce problème, il est proposé de réaliser tout un ensemble de vitrages prototypes en procédant à l'encapsulation de vitrages tests qui correspondent au vitrage de référence avec des inserts correspondant à ceux du vitrage de référence et avec un moule d'encapsulation comportant une empreinte de moule correspondant à celle du vitrage de référence.

Cet ensemble de vitrages prototypes est constitué au minium de trois vitrages et de préférence d'au moins dix vitrages. Une valeur adéquate semble se situer autour de vingt. Il ne semble pas nécessaire de fabriquer plus de trente vitrages prototypes.

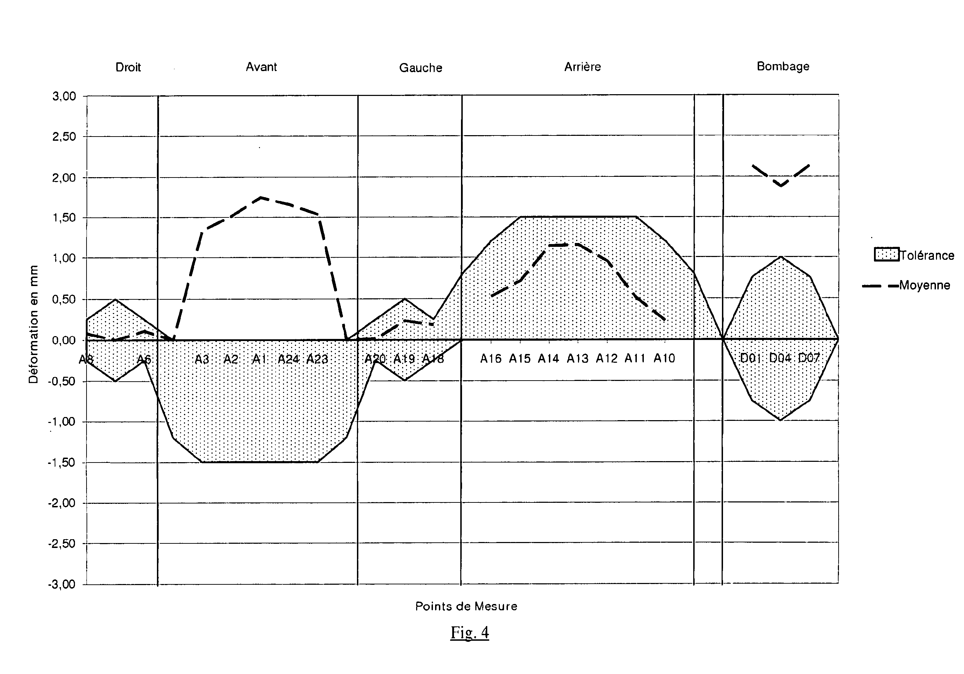

La figure 4 illustre la déformation moyenne en certains points de tous les vitrages prototypes, en mm, par rapport à la déformation du vitrage de référence, ainsi que les zones de tolérances admises. Sur cette figure, il peut être observé que la tolérance ne dépasse jamais 1,5 mm par rapport à la mesure de référence.

Ces mesures ont été réalisées après l'encapsulation, une fois les vitrages prototypes revenus à la température ambiante (23 °C).

Comme visible sur cette figure, les mesures réalisées sur les bords gauche et droit des vitrages prototypes, qui ne comportent pas d'insert, sont dans les zones de tolérance.

Les mesures réalisées sur le bord arrière des vitrages prototypes sont également dans la zone de tolérance, mais les mesures réalisées sur le bord avant sont complètement en dehors de la zone de tolérance et les mesures réalisées aux points de bombage (là où il y a un changement de sens de l'incurvation), sont également en dehors des zones de tolérance : le vitrage est trop galbé.

Pour fabriquer le vitrage 10 en série, il est ainsi proposé dans une première solution de réaliser une correction de l'empreinte du moule d'encapsulation sur le bord avant du vitrage. Puisque le vitrage est trop incurvé après encapsulation dans cette zone, l'empreinte peut être modifiée de manière à s'opposer à une incurvation trop grande du vitrage dans cette zone.

L'efficacité de la correction est ensuite testée en réalisant un nouvel ensemble de vitrages prototypes en procédant à l'encapsulation de vitrages tests.

Pour fabriquer le vitrage 10 en série, il est aussi possible dans une deuxième solution, alternativement ou cumulativement avec la première solution, de prendre avant l'encapsulation des vitrages qui ne correspondent pas au vitrage de référence, ces vitrages étant :
- soit trop galbés dans les endroits où il a été constaté que les vitrages tests après encapsulation n'étaient pas assez galbés,
- soit pas assez galbés dans les endroits où il a été constaté que les vitrages tests après encapsulation étaient trop galbés.

Pour fabriquer le vitrage 10 en série, il est aussi possible dans une troisième solution, alternativement ou cumulativement avec la première solution et/ou la deuxième solution, de prendre avant l'encapsulation des inserts qui ne correspondent pas ceux normalement utilisés pour le vitrage de référence, ces inserts étant :
- soit trop galbés dans les endroits où il a été constaté que les vitrages tests après encapsulation n'étaient pas assez galbés,
- soit pas assez galbés dans les endroits où il a été constaté que les vitrages tests après encapsulation étaient trop galbés.

La réalisation des inserts qui ne correspondent pas à ceux normalement utilisés pour le vitrage de référence peut être opérée par exemple en modifiant par pressage des inserts normalement utilisés pour le vitrage de référence ou en lançant la fabrication de nouveaux inserts différents de ceux normalement utilisés pour le vitrage de référence.

Si certaines mesures moyennes sont encore en dehors de la zone de tolérance, une nouvelle correction peut encore être apportée à l'empreinte du moule et/ou aux vitrages avant encapsulations et/ou aux inserts avant encapsulation.

Pour compenser les valeurs moyennes de galbe après encapsulation qui sont trop élevées ou trop basses, les étapes suivantes sont successivement mises en oeuvre :
- calcul de la moyenne de l'écart au nominal Pi en chaque point i de galbe pour l'ensemble des vitrages prototypes,
- calcul de l'écart Pi en chaque point i par rapport au vitrage de référence et calcul de la moyenne Qi de cet écart du point i situé coté gauche de l'axe longitudinal des vitrages prototypes avec l'écart de son homologue coté droit de l'axe longitudinal des vitrages prototypes,
- calcul de l'écart Ti en chaque point i au nominal du centre de l'intervalle de tolérance, et
- calcul de la compensation de galbe en chaque point i des demi volumes gauche et droit par la formule : Qi-Ti.

Cette méthode réalise une scission des mesures côté gauche et côté droit pour permettre de calculer au final une compensation symétrique par rapport à l'axe longitudinal des vitrages.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

La présente invention est en particulier applicable à tout vitrage automobile, ainsi qu'à tout vitrage quelconque dès lors qu'il est galbé et est muni d'une portion de cordon profilé encapsulé intégrant au moins une partie d'insert.

## Revendications

1. Procédé de fabrication de vitrages (10) en série à partir de données nominales définissant un vitrage de référence qui est galbé, ainsi que d'intervalles de tolérances admises pour ces données nominales,
dans lequel les vitrages en série sont chacun galbés et sont chacun munis d'au moins un cordon profilé (20) en polymère comportant un ou plusieurs insert(s) (30, 40), ledit cordon profilé étant fabriqué par encapsulation d'un élément vitré dans un moule présentant une empreinte,
dans lequel les vitrages de série fabriqués présentent un galbe qui correspond à celui du vitrage de référence en respectant les intervalles de tolérance,
et dans lequel dans la série, pour chaque vitrage dans la série, au moins,
i- l'empreinte du moule, ou
ii- l'élément vitré, ou
iii- l'insert ou les inserts,
ne présente(nt) pas une configuration correspondant aux dimensions pour le vitrage de référence.

2. Procédé de fabrication selon la revendication 1, dans lequel dans la série, pour chaque vitrage, l'empreinte du moule ne présente pas une configuration correspondant aux dimensions pour le vitrage de référence.

3. Procédé de fabrication selon la revendication 1, dans lequel dans la série, pour chaque vitrage, l'élément vitré ne présente pas une configuration correspondant aux dimensions pour le vitrage de référence.

4. Procédé de fabrication selon la revendication 1, dans lequel dans la série, pour chaque vitrage l'insert ou les inserts ne présente(nt) pas une configuration correspondant aux dimensions pour le vitrage de référence.

5. Procédé de fabrication selon la revendication 1, dans lequel dans la série, pour chaque vitrage, d'une part l'empreinte du moule et d'autre part l'élément vitré ne présentent pas une configuration correspondant aux dimensions pour le vitrage de référence.

6. Procédé de fabrication selon la revendication 1, dans lequel dans la série, pour chaque vitrage, d'une part l'empreinte du moule et d'autre part l'insert ou les inserts ne présentent pas une configuration correspondant aux dimensions pour le vitrage de référence.

7. Procédé de fabrication selon la revendication 1, dans lequel dans la série, pour chaque vitrage, au moins, d'une part l'élément vitré et d'autre part l'insert ou les inserts, ne présentent pas une configuration correspondant aux dimensions pour le vitrage de référence.

8. Procédé de fabrication selon la revendication 1. dans lequel dans la série, pour chaque vitrage, ni l'empreinte du moule, ni l'élément vitré, ni l'insert ou les inserts ne présentent une configuration correspondant aux dimensions pour le vitrage de référence.

9. Procédé de fabrication selon la revendication 1, ledit procédé comportant au moins les étapes consistant à :
A- fabriquer un ensemble de vitrages prototypes par encapsulation d'éléments vitrés dans un moule présentant une empreinte,
B- mesurer le galbe de tous les vitrages prototypes de l'étape précédente après l'encapsulation,
C- corriger au moins un matériel choisi dans la liste suivante :
i- l'empreinte du moule, ou
ii- l'élément vitré, ou
iii- l'insert ou les inserts,
pour compenser les valeurs moyennes de galbe après encapsulation qui sont trop élevées ou trop basses,
D- fabriquer les vitrages de série par encapsulation dans un moule avec le matériel corrigé.

10. Procédé de fabrication selon la revendication 9, dans lequel l'étape C de correction d'au moins un matériel est opérée sur un matériel présentant avant l'étape de correction une configuration correspondant aux dimensions nominales pour le vitrage de référence.

11. Procédé de fabrication selon la revendication 9, dans lequel au moins un matériel présente avant l'étape C de correction une configuration ne correspondant pas aux dimensions nominales pour le vitrage de référence.

12. Procédé de fabrication selon la revendication 9, dans lequel aucun matériel i, ii ou iii ne présente avant l'étape C de correction une configuration correspondant aux dimensions nominales pour le vitrage de référence.

13. Procédé de fabrication selon la revendication 9, dans lequel pour corriger l'empreinte du moule pour compenser les valeurs moyennes de galbe après encapsulation qui sont trop élevées ou trop basses, les étapes suivantes sont successivement mises en oeuvre :
- sélectionner un ensemble de points i identiques dans les trois dimensions pour tous les vitrages prototypes et le vitrage de référence,
- calculer pour l'ensemble des vitrages prototypes la moyenne de l'écart au nominal du vitrage de référence Pi en chaque point i de galbe,
- calculer la moyenne Qi de cet écart Pi du point situé coté gauche de l'axe longitudinal des vitrages prototypes avec l'écart Pi de son homologue coté droit de l'axe longitudinal des vitrages prototypes,
- calculer l'écart Ti en chaque point i entre le nominal du vitrage de référence et le centre de l'intervalle de tolérance admissible au point i,
- calculer la compensation de galbe en chaque point i des demi volumes gauche et droit par la formule : Qi-Ti.

14. Procédé de fabrication selon la revendication 9, dans lequel pour corriger l'élément vitré pour compenser les valeurs moyennes de galbe après encapsulation qui sont trop élevées ou trop basses, des paramètres de bombage des éléments vitrés sont modifiés, ces paramètres étant choisis au moins dans la liste suivante :
- configuration du chauffage, en intensité et en localisation,
- forme de l'outil de support et/ou de l'outil de formage de l'élément vitré.

15. Procédé de fabrication selon la revendication 9, dans lequel pour corriger l'insert ou les inserts pour compenser les valeurs moyennes de galbe après encapsulation qui sont trop élevées ou trop basses, la forme de l'insert ou des inserts est modifiée.

## Claims

1. A method for the mass-production of window glazings (10) using nominal data defining a reference window glazing which is curved, and permissible tolerance bands for these nominal data,
in which the mass-produced window glazings are each curved and each equipped with at least one profiled polymer strip (20) comprising one or more insert(s) (30, 40), said profiled strip being produced by encapsulating a glazed element in a mold exhibiting a molding cavity,
in which the mass-produced window glazings produced have a curvature which corresponds to that of the reference window glazing, within the tolerance bands, and in which, in the production run, for each window glazing of the production run, at least
i - the molding cavity of the mold, or
ii - the glazed element, or
iii - the insert or inserts,
is (are) not of a configuration that corresponds to the dimensions for the reference window glazing.

2. The production method as claimed in claim 1, in which, in the production run, for each window glazing, the molding cavity of the mold is not of a configuration that corresponds to the dimensions for the reference window glazing.

3. The production method as claimed in claim 1, in which, in the production run, for each window glazing, the glazed element is not of a configuration that corresponds to the dimensions for the reference window glazing.

4. The production method as claimed in claim 1, in which, in the production run, for each window glazing the insert or inserts is (are) not of a configuration that corresponds to the dimensions for the reference window glazing.

5. The production method as claimed in claim 1, in which, in the production run, for each window glazing, on the one hand, the molding cavity of the mold and, on the other hand, the glazed element are not of a configuration that corresponds to the dimensions for the reference window glazing.

6. The production method as claimed in claim 1, in which, in the production run, for each window glazing, on the one hand, the molding cavity of the mold and, on the other hand, the insert or inserts are not of a configuration that corresponds to the dimensions for the reference window glazing.

7. The production method as claimed in claim 1, in which, in the production run, for each window glazing, at least, on the one hand, the glazed element and, on the other hand, the insert or inserts, are not of a configuration that corresponds to the dimensions for the reference window glazing.

8. The production method as claimed in claim 1, in which, in the production run, for each window glazing, the molding cavity of the mold, the glazed element and the insert or inserts are none of them of a configuration that corresponds to the dimensions for the reference window glazing.

9. The production method as claimed in claim 1, said method comprising at least the steps which consist in:
A - manufacturing a collection of prototype window glazings by encapsulating glazed elements in a mold that has a molding cavity,
B - measuring the curvature of all the prototype window glazings of the previous step following encapsulation,
C - correcting at least one piece of hardware chosen from the following list:
i - the molding cavity of the mold, or
ii - the glazed element, or
iii - the insert or inserts,
in order to compensate for the post-encapsulation mean degrees of curvature which are too high or too low,
D - producing the mass-produced window glazings by encapsulation in a mold using the corrected hardware.

10. The production method as claimed in claim 9, in which step C of correcting at least one piece of hardware is performed on a piece of hardware which, prior to the correction step, is of a configuration that corresponds to the nominal dimensions for the reference window glazing.

11. The production method as claimed in claim 9, in which prior to the correction step C, at least one piece of hardware is of a configuration that does not correspond to the nominal dimensions for the reference window glazing.

12. The production method as claimed in claim 9, in which prior to the correction step C, none of the pieces of hardware i, ii or iii is of a configuration that corresponds to the nominal dimensions for the reference window glazing.

13. The production method as claimed in claim 9, in which, in order to correct the molding cavity of the mold in order to compensate for the post-encapsulation mean degrees of curvature that are too high or too low, the following steps are performed in succession:
- selecting a collection of identical points i in all three dimensions for all the prototype window glazings and the reference window glazing,
- calculating, for the collection of prototype window glazings, the mean deviation from the nominal of the reference window glazing Pi at each point i of the curvature,
- calculating the mean Qi of this deviation Pi of the point situated on the left-hand side of the longitudinal axis of the prototype window glazings with the deviation Pi of its counterpart on the right-hand side of the longitudinal axis of the prototype window glazings,
- calculating the deviation Ti at each point i between the nominal of the reference window glazing and the center of the permissible tolerance band at the point i,
- calculating the curvature compensation at each point i of the left-hand and right-hand half-volumes using the formula: Qi-Ti.

14. The production method as claimed in claim 9, in which, in order to correct the glazed element in order to compensate for the post-encapsulation mean degrees of curvature which are too high or too low, bending parameters pertaining to the glazed elements are modified, these parameters being chosen at least from the following list:
- the heating configuration, both in terms of intensity and in terms of location,
- the shape of the tool used to support and/or of the tool used to shape the glazed element.

15. The production method as claimed in claim 9, in which, in order to correct the insert or inserts in order to compensate for post-encapsulation mean degrees of curvature which are too high or too low, the shape of the insert or inserts is modified.

## Patentansprüche

1. Verfahren zur Herstellung von Serienverglasungen (10) anhand von nominalen Daten, die eine gewölbte Referenzverglasung definieren, sowie anhand von zulässigen Toleranzintervallen für diese nominalen Daten,
wobei die Serienverglasungen jeweils gewölbt sind und jeweils mit wenigstens einem Polymer-Profilstrang (20) versehen sind, der einen Einsatz oder mehrere Einsätze (30, 40) umfasst, wobei der Profilstrang durch Verkapselung eines Glaselements in einer eine Vertiefung aufweisenden Form hergestellt wird,
wobei die hergestellten Serienverglasungen eine Rundung aufweisen, die derjenigen der Referenzverglasung unter Einhaltung der Toleranzintervalle entspricht,
und wobei in der Serie, für jede Verglasung in der Serie, wenigstens
i- die Vertiefung der Form oder
ii- das Glaselement oder
iii- der Einsatz oder die Einsätze
keine den Abmessungen für die Referenzverglasung entsprechende Ausbildung aufweist bzw. aufweisen.

2. Herstellungsverfahren nach Anspruch 1, wobei in der Serie, für jede Verglasung, die Vertiefung der Form keine den Abmessungen für die Referenzverglasung entsprechende Ausbildung aufweist.

3. Herstellungsverfahren nach Anspruch 1, wobei in der Serie, für jede Verglasung, das Glaselement keine den Abmessungen für die Referenzverglasung entsprechende Ausbildung aufweist.

4. Herstellungsverfahren nach Anspruch 1, wobei in der Serie, für jede Verglasung, der Einsatz oder die Einsätze keine den Abmessungen für die Referenzverglasung entsprechende Ausbildung aufweist bzw. aufweisen.

5. Herstellungsverfahren nach Anspruch 1, wobei in der Serie, für jede Verglasung, einerseits die Vertiefung der Form und andererseits das Glaselement keine den Abmessungen für die Referenzverglasung entsprechende Ausbildung aufweisen.

6. Herstellungsverfahren nach Anspruch 1, wobei in der Serie, für jede Verglasung, einerseits die Vertiefung der Form und andererseits der Einsatz oder die Einsätze keine den Abmessungen für die Referenzverglasung entsprechende Ausbildung aufweisen.

7. Herstellungsverfahren nach Anspruch 1, wobei in der Serie, für jede Verglasung, wenigstens einerseits das Glaselement und andererseits der Einsatz oder die Einsätze keine den Abmessungen für die Referenzverglasung entsprechende Ausbildung aufweisen.

8. Herstellungsverfahren nach Anspruch 1, wobei in der Serie, für jede Verglasung, weder die Vertiefung der Form, noch das Glaselement, noch der Einsatz oder die Einsätze eine den Abmessungen für die Referenzverglasung entsprechende Ausbildung aufweisen.

9. Herstellungsverfahren nach Anspruch 1, wobei das Verfahren wenigstens die Schritte umfasst, die darin bestehen:
A- einen Satz von Prototypenverglasungen durch Verkapseln von Glaselementen in einer eine Vertiefung aufweisenden Form herzustellen,
B- die Rundung aller Prototypenverglasungen des vorhergehenden Schrittes nach dem Verkapseln zu messen,
C- wenigstens ein aus der folgenden Liste ausgewähltes Material zu korrigieren:
i- die Vertiefung der Form oder
ii- das Glaselement oder
iii- den Einsatz oder die Einsätze,
um die durchschnittlichen Rundungswerte nach dem Verkapseln, die zu hoch oder zu niedrig sind, auszugleichen,
D- die Serienverglasungen durch Verkapseln in einer Form mit dem korrigierten Material herzustellen.

10. Herstellungsverfahren nach Anspruch 9, wobei der Schritt C zum Korrigieren wenigstens eines Materials an einem Material vollzogen wird, das vor dem Korrekturschritt eine den Nennabmessungen für die Referenzverglasung entsprechende Ausbildung aufweist.

11. Herstellungsverfahren nach Anspruch 9, wobei wenigstens ein Material vor dem Korrekturschritt C eine Ausbildung aufweist, die nicht den Nennabrnessungen für die Referenzverglasung entspricht.

12. Herstellungsverfahren nach Anspruch 9, wobei kein Material i, ii oder iii vor dem Korrekturschritt C eine Ausbildung aufweist, die den Nennabmessungen für die Referenzverglasung entspricht.

13. Herstellungsverfahren nach Anspruch 9, wobei zur Korrektur der Vertiefung der Form, um die durchschnittlichen Rundungswerte nach dem Verkapseln, die zu hoch oder zu niedrig sind, auszugleichen, nacheinander die folgenden Schritte durchgeführt werden:
- Auswählen einer Menge von identischen Punkten i in den drei Dimensionen für alle Prototypenverglasungen und die Referenzverglasung,
- Berechnen des Mittelwertes der Abweichung vom Nominalwert der Referenzverglasung Pi in jedem Punkt i der Rundung, für alle Prototypenverglasungen,
- Berechnen des Mittelwertes Qi aus dieser Abweichung Pi des auf der linken Seite der Längsachse der Prototypenverglasungen gelegenen Punktes und der Abweichung Pi seiner auf der rechten Seite der Längsachse der Prototypenverglasungen gelegenen Entsprechung,
- Berechnen der Abweichung Ti in jedem Punkt i zwischen dem Nominalwert der Referenzverglasung und der Mitte des am Punkt i zulässigen Toleranzintervalls,
- Berechnen des Rundungsausgleichs in jedem Punkt i des linken halben Volumens und des rechten halben Volumens mittels der Formel: Qi-Ti.

14. Herstellungsverfahren nach Anspruch 9, wobei zur Korrektur des Glaselements, um die durchschnittlichen Rundungswerte nach dem Verkapseln, die zu hoch oder zu niedrig sind, auszugleichen, Wölbungsparameter der Glaselemente modifiziert werden, wobei diese Parameter wenigstens aus folgender Liste ausgewählt sind:
- Gestaltung des Erhitzens, hinsichtlich Intensität und Lokalisierung,
- Form des Tragwerkzeugs und/oder des Werkzeugs zur Formung des Glaselements.

15. Herstellungsverfahren nach Anspruch 9, wobei zur Korrektur des Einsatzes oder der Einsätze, um die durchschnittlichen Rundungswerte nach dem Verkapseln, die zu hoch oder zu niedrig sind, auszugleichen, die Form des Einsatzes oder der Einsätze verändert wird.
